# EUROPÄISCHE PATENTANMELDUNG

(11) **EP 4 008 520 A1**
(43) Veröffentlichungstag der Anmeldung: **08.06.2022**
(21) Anmeldenummer: 21209758.8
(22) Anmeldetag: 23.11.2021
(51) Int. Cl.: B29C 48/68, B29C 48/685, B29C 48/80

(54) **EINSCHNECKENEXTRUDER ZUR KONSTSTOFFPLASTIFIZIERUNG**

(30) Priorität: 01.12.2020 DE 102020215145
(71) Anmelder: Helix GmbH, 71364 Winnenden (DE)
(72) Erfinder: Thieleke, Philipp, 71334 Waiblingen (DE)
(74) Vertreter: Patentanwälte Ruff, Wilhelm, Beier, Dauster & Partner mbB

(57) **Zusammenfassung**

Einschneckenextruder zur Kunststoffplastifizierung

Der Zylinder des Einschneckenextruders ist im Bereich der Kühlzone innenseitig mit wenigstens einer zu der Förderschnecke hin offenen Wendelnut versehen, und der Zylinder ist außenseitig im Bereich der Kühlzone mit wenigstens einer Kühlnut versehen, die der Wendelnut derart zugeordnet ist, dass sich zwischen der innenseitigen Wendelnut und der außenseitigen Kühlnut eine gegenüber einer Zylinderwandungsstärke reduzierte Wandungsstärke des Zylinders ergibt. Der Einschneckenextruder wird zur Herstellung von geschäumten Kunststoffen eingesetzt.

## Beschreibung

Die Erfindung betrifft einen Einschneckenextruder zur Kunststoffplastifizierung mit einem insbesondere einteiligen Zylinder und mit einer in einem Zylinderraum des Zylinders drehbaren Förderschnecke, wobei dem Zylinderraum eine Einzugszone, eine in Förderrichtung hinter der Einzugszone positionierte Plastifizierzone und eine der Plastifizierzone nachgelagerte Kühlzone zugeordnet sind, die von einer Kühleinrichtung umgeben ist.

Ein Einschneckenextruder ist aus der DE 10 2017 207 357 A1 bekannt. Der bekannte Einschneckenextruder weist einen einteiligen Zylinder sowie eine in einem Zylinderraum des Zylinders drehbar gelagerte Förderschnecke auf. Der Zylinderraum ist mit einem Einzugsbereich sowie einer sich in Förderrichtung konisch verjüngenden Übergangszone und hieran anschließend mit einer Plastifizierzone versehen. Der Einzugsbereich und die Übergangszone des Zylinderraums sind mit Wendelnuten versehen. Eine weitere Ausgestaltung zeigt eine Fortsetzung der Wendelnuten in die Plastifizierzone hinein.

Aus der DE 10 2011 086 981 A1 ist ein Einschneckenextruder zur Herstellung von Mozzarella bekannt, der einen mehrteiligen Zylinder und eine in dem Zylinder drehbar gelagerte Förderschnecke aufweist. Einem Außenmantel des Zylinders sind Heiz- oder Kühlmittel zugeordnet, wobei eine Zylinderwandung außenseitig im Bereich der Heiz- oder Kühlmittel mit einer Rippenstruktur versehen ist.

Aufgabe der Erfindung ist es, einen Einschneckenextruder der eingangs genannten Art zu schaffen, der zur Herstellung geschäumter Kunststoffe geeignet ist.

Diese Aufgabe wird dadurch gelöst, dass der Zylinder im Bereich der Kühlzone innenseitig mit wenigstens einer zu der Förderschnecke hin offenen Wendelnut versehen ist, und dass der Zylinder außenseitig im Bereich der Kühlzone mit wenigstens einer Kühlnut versehen ist, die der Wendelnut derart zugeordnet ist, dass sich zwischen der innenseitigen Wendelnut und der außenseitigen Kühlnut eine gegenüber einer Zylinderwandungsstärke reduzierte Wandungsstärke des Zylinders ergibt. Die wenigstens eine Kühlnut ist der wenigstens einen Wendelnut derart zugeordnet, dass Wandungsabschnitte des Zylinders zwischen diesen innen-und außenseitigen Nuten Wärmeübergangsbrücken bilden, durch die eine schnelle Abkühlung der Kunststoffschmelze im Zylinderraum durch die die Kühlzone umgebende Kühleinrichtung gewährleistet ist. Erfindungsgemäß ist wenigstens eine zur Förderschnecke hin offene Wendelnut vorgesehen, die sich über eine gesamte Länge der Kühlzone erstreckt - in axialer Richtung der Förderschnecke gesehen. In vorteilhafter Weise können mehrere Wendelnuten vorgesehen sein, die parallel zueinander ausgerichtet sind und sich jeweils nur über einen Teilbereich der axialen Länge der Kühlzone erstrecken. Vorteilhaft sind bis zu vierzig derartiger Wendelnuten vorgesehen. Die erfindungsgemäße Lösung ist besonders vorteilhaft für das physikalische Schäumen von Kunststoffen mit Gasen wie insbesondere Stickstoff oder CO₂ vorgesehen. Dabei wird ein entsprechendes Gas in die vollständig aufgeschmolzene Kunststoffschmelze injiziert. Nach der Gasinjektion muss das Gas innerhalb der Kunststoffschmelze homogenisiert werden, wobei vorzugsweise ein vollständiges Lösen des Gases in der Kunststoffschmelze erzielt werden soll. Durch das gelöste Gas sinkt eine Viskosität der gasbeladenen Kunststoffschmelze ab. Um einen funktionierenden Schäumprozess zu gewährleisten, ist es notwendig, die Kunststoffschmelze herunterzukühlen. Durch die wenigstens eine Wendelnut in der Kühlzone wird eine Oberfläche der Wandung des Zylinderraums für einen entsprechenden Wärmeübergang vergrößert. Die außenseitigen Kühlnuten, die in ihrer Positionierung auf die innenseitigen Wendelnuten abgestimmt sind, ergeben gemeinsam mit diesen innenseitigen Wendelnuten eine Dünnwandigkeit des Zylinders, die eine Kühlleistung begünstigt. Die Kühlnuten sind im Betrieb des Einschneckenextruders von einer Kühlflüssigkeit durchströmt.

In Ausgestaltung der Erfindung ist dem Zylinderraum in Förderrichtung vor der Kühlzone eine Gasinjektionsstelle zugeordnet. Die Gasinjektionsstelle ist vorzugsweise endseitig einer Plastifizierzone vorgesehen, so dass entsprechendes Gas an einer Stelle injiziert werden kann, an der das Kunststoffmaterial vollständig aufgeschmolzen ist.

In weiterer Ausgestaltung der Erfindung ist die wenigstens eine Kühlnut wendelförmig gestaltet. In vorteilhafter Weise weisen die wenigstens eine Wendelnut und die wenigstens eine Kühlnut gleiche Wendelsteigungen auf und sind auf eine Mittellängsachse des Zylinderraums bezogen axial versetzt alternierend zueinander angeordnet. Der Begriff der gleichen Wendelsteigungen bedeutet bei dieser Ausgestaltung auch einen gleichen Drehsinn der Wendelungen. Unter axial versetzt ist ein axiales Versetzen relativ zu einer Mittellängsachse des Zylinderraums zu verstehen. Das alternierende Versetzen relativ zueinander bedeutet, dass jeweils immer eine außenseitige Kühlnut und eine innenseitige Wendelnut gleichmäßig versetzt zueinander positioniert sind, so dass sich beidseitig der Wandungen der wenigstens einen Wendelnut jeweils eine gleichbleibende Wandungsstärke des Zylinders ergibt.

In weiterer Ausgestaltung der Erfindung überlagern die Wendelnut und die Kühlnut einander radial zu einer Drehachse der Förderschnecke abschnittsweise. Diese Ausgestaltung verbessert einen Wärmeübergang zwischen der wenigstens einen Kühlnut und der wenigstens einen Wendelnut weiter.

In weiterer Ausgestaltung der Erfindung weist die Kühleinrichtung einen ringmanschettenförmigen Kühlmantel auf, der die Kühlzone des Zylinders umlaufend stützend umschließt. Der Kühlmantel trägt dazu bei, für die dünnwandige Gestaltung des Zylinders im Bereich der Kühlzone eine ausreichende Druckfestigkeit zu erzielen. Die umlaufende Stützung durch den ringmanschettenförmigen Kühlmantel erhöht die Druckfestigkeit des Zylinders im Bereich dieser Kühlzone.

In weiterer Ausgestaltung der Erfindung ist die Förderschnecke als Wellenschnecke gestaltet mit einem wendelförmig gewellten Schneckenkern, auf dem wenigstens ein wendelförmiger Schneckensteg aufgebracht ist, der wenigstens einen Schneckengang definiert, der aufgrund der wendelförmigen Wellung des Schneckenkerns alternierende Gangtiefen aufweist. Die Wellenschnecke bildet somit bezüglich ihres wenigstens einen Schneckengangs eine Schneckenwendel. Maßgeblich ist es, dass entsprechende Wellenberge der Schneckenwendel, d.h. des Schneckengangs, in Schneckengangrichtung und nicht in Axialrichtung der Förderschnecke eingebracht sind. Im Betrieb des Einschneckenextruders entstehen durch diese Wellenschnecke an jeder axialen Position der Kühlzone des Zylinders mit jeder Umdrehung der Wellenschnecke am gesamten Umfang Bereiche, in denen die Kunststoffschmelze viel Platz zwischen der Wellenschnecke und der Wandung des Zylinderraums hat, und weitere Bereiche, in denen lediglich sehr wenig Platz zwischen der Förderschnecke und der Wandung des Zylinderraums ist. Somit wechseln hohe und niedrige Schneckengangtiefen einander ab. Die niedrigen Schneckengangtiefen sind notwendig, um in den Wendelnuten eine hohe Schergeschwindigkeit für die Kunststoffschmelze zu erzeugen. Dies ermöglicht eine gute Förderung der Kunststoffschmelze durch die Wendelnuten hindurch und verhindert zuverlässig eine Stagnation der Kunststoffschmelze in den Wendelnuten.

In weiterer Ausgestaltung der Erfindung ist eine Wendelrichtung des wendelförmigen Schneckenstegs entgegengerichtet zu einer Wendelrichtung der wenigstens einen Wendelnut des Zylinderraums im Bereich der Kühlzone ausgeführt. Diese Ausgestaltung verbessert eine Homogenisierung der gasbeladenen Kunststoffschmelze.

In weiterer Ausgestaltung der Erfindung weist die wenigstens eine Wendelnut eine Nutsteigung aus einem Bereich von 0,5- bis 50-mal, vorzugsweise 0,5- bis 5-mal, einem Innendurchmesser des Zylinderraums auf. Diese Ausgestaltung hat sich als besonders vorteilhaft erwiesen für die Erzielung eines funktionierenden Schäumprozesses für die gasbeladene Kunststoffschmelze.

In weiterer Ausgestaltung der Erfindung entspricht eine Nutlänge der Wendelnut wenigstens dem Dreifachen des Innendurchmessers des Zylinderraums und weniger als 25-mal dem Innendurchmesser des Zylinderraums. Dieser Bereich ist vorteilhaft für die Herstellung eines homogenen Kunststoffschaummaterials.

In weiterer Ausgestaltung der Erfindung ist die Wendelnut mit einem Einlaufbereich mit sich in Förderrichtung von Null aus vergrößernder Nuttiefe, mit einem Konstantbereich mit konstanter Nuttiefe und mit einem Auslaufbereich mit sich bis auf Null reduzierender Nuttiefe versehen. Der Einlauf- und der Auslaufbereich gewährleisten, dass sich kein Schmelzematerial in der wenigstens einen Wendelnut festsetzen kann. Vorteilhaft weisen der Einlaufbereich und der Auslaufbereich jeweils eine axiale Länge aus einem Bereich von 0,3- bis 1-mal dem Innendurchmesser des Zylinderraums auf.

In weiterer Ausgestaltung der Erfindung entspricht eine Gangsteigung des wenigstens einen Schneckengangs zwischen 0,5- und 10-mal dem Innendurchmesser des Zylinderraums. Zudem entspricht vorzugsweise eine Breite des wenigstens einen Schneckenstegs 0,1- bis 0,2-mal dem Innendurchmesser des Zylinderraums. Schließlich beträgt vorteilhaft die alternierende Gangtiefe des Schneckengangs zwischen 0,05 und 40 mm abhängig von einem Durchmesser der Wellenschnecke. Diese Ausgestaltungen tragen ebenfalls zur Erzielung einer Homogenisierung der gasbeladenen Kunststoffschmelze bei.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt einen Längsschnitt durch eine bevorzugte Ausführungsform eines erfindungsgemäßen Einschneckenextruders,
- Fig. 2: in vergrößerter Darstellung einen Ausschnitt des Längsschnitts gemäß Fig. 1 im Bereich einer Kühlzone und
- Fig. 3: in vergrößerter Darstellung einen Querschnitt entlang der Schnittlinie III-III durch den Ausschnitt gemäß Fig. 2.

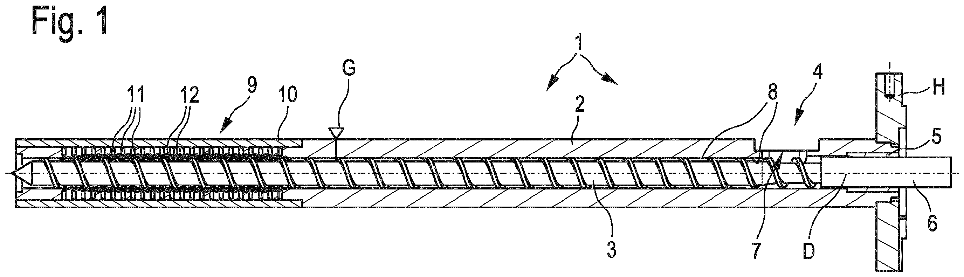

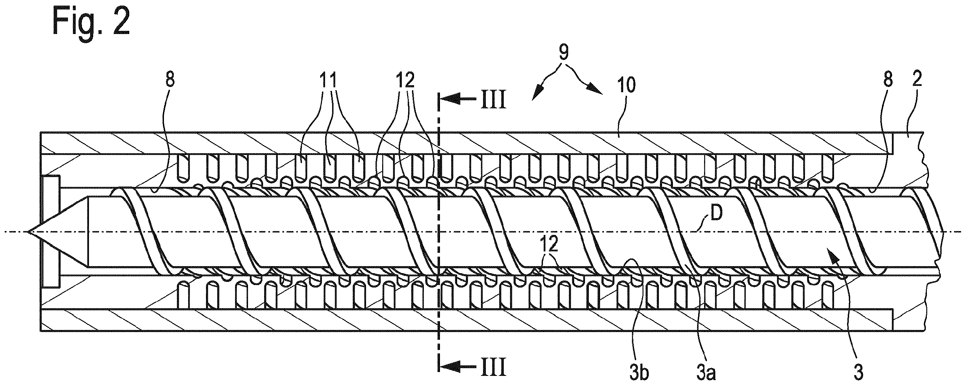

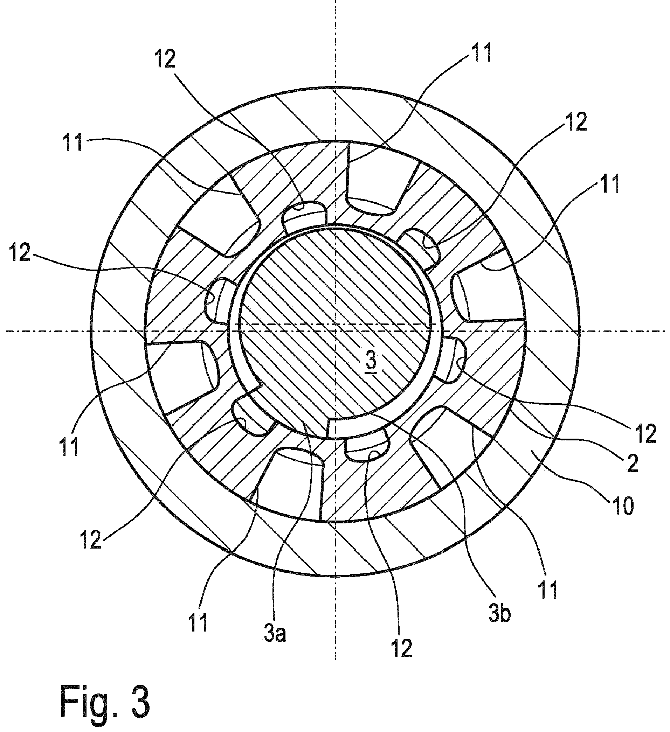

Ein Einschneckenextruder 1 nach den Fig. 1 bis 3 ist zur Herstellung von geschäumtem Kunststoffmaterial vorgesehen. Der Einschneckenextruder 1 weist einen einteiligen Zylinder 2 auf, der an einem Ende in einer Halterung H ortsfest gehalten ist. In dem Zylinder 2 ist ein Zylinderraum 8 vorgesehen, der sich über eine gesamte Länge des Zylinders 2 erstreckt, so dass der Zylinder 2 einen Hohlzylinder bildet. In dem Zylinderraum 8 ist eine Förderschnecke 3 drehbar gelagert, die anhand der Fig. 1 und 2 lediglich schematisch dargestellt ist. Die Förderschnecke 3 bildet eine nachfolgend näher beschriebene Wellenschnecke. In der Querschnittsdarstellung gemäß Fig. 3 ist diese Wellenschnecke in ihrer tatsächlichen geometrischen Gestaltung dargestellt. Die Förderschnecke 3 erstreckt sich über die gesamte Länge des Zylinderraums 8. Die Förderschnecke 3 dient dazu, durch eine Einfüllöffnung 7 einer Einzugszone 4 des Zylinders 2 zugeführtes, schüttfähiges Kunststoffmaterial, vorzugsweise in Form von Kunststoffgranulat, von der Einzugszone 4 weg in Richtung eines in Fig. 1 und 2 links dargestellten Austritts des Zylinderraums 8 zu fördern. Dem Zylinder 2 ist im Bereich einer an die Einzugszone 4 anschließenden Plastifizierzone eine nicht näher dargestellte Heizeinrichtung zugeordnet, durch die das Kunststoffmaterial aufgeschmolzen und in eine vollständig plastifizierte Kunststoffschmelze umgewandelt wird. Die Förderschnecke 3 ist an einem dem Austritt gegenüberliegenden Stirnendbereich mit einem Antriebsfortsatz 6 versehen, der in einem Lagerbock 5 des Zylinders 2 drehbar gelagert ist. Dem Antriebsfortsatz 6 ist in nicht näher dargestellter Weise ein Antriebssystem zugeordnet, das die Förderschnecke 3 in einer Drehrichtung antreibt, die eine Förderung des Kunststoffmaterials von der Einzugszone 4 weg in Richtung des Austritts des Zylinderraums 8 ermöglicht.

Endseitig der Plastifizierzone ist eine Gasinjektionsstelle G vorgesehen, in der dem Zylinderraum 8 Gas zugeführt wird, das zum Schäumen der Kunststoffschmelze vorgesehen ist. Im Anschluss an diese Gasinjektionsstelle G weist der Einschneckenextruder 1 eine Kühlzone 9 auf, die in Fig. 2 vergrößert dargestellt ist.

Wie anhand der Fig. 2 gut erkennbar ist, ist die Kühlzone 9 im Bereich des Zylinderraums 8 mit zur Mitte des Zylinderraums hin offenen Wendelnuten 12 versehen, wobei beim dargestellten Ausführungsbeispiel eine einzige, durchgängige Wendelnut 12 über eine Vielzahl von Wendelungen über die Länge der Kühlzone 9 erstreckt ist. Anhand der Fig. 2 ist auch erkennbar, dass die Wendelnut 12 zu Beginn der Kühlzone 9 einen Einlaufbereich aufweist, währenddessen sich die Tiefe der Wendelnut 12 von Null auf die maximale Tiefe erhöht, die über einen Konstantbereich und damit über nahezu die gesamte Länge der Kühlzone 9 konstant bleibt. An einem förderseitigen Ende der Kühlzone 9 ist für die Wendelnut 12 ein Auslaufbereich erkennbar, in dem die Tiefe der Wendelnut wieder bis auf Null reduziert wird.

Alternierend zu den nach innen zum Zylinderraum 8 hin offenen Wendelnuten weist der Zylinder 2 wenigstens eine wendelförmige Kühlnut 11 auf, die zu einem Außenumfang des Zylinders 2 hin offen ist. Wie in Fig. 2 erkennbar ist, weisen die verschiedenen Nutwindungen der Kühlnut 11 gleiche Abstände zueinander auf wie die Wendelnutwindungen der Wendelnut 12. Es ist jeweils alternierend eine von außen nach innen in Richtung einer Drehachse D der Förderschnecke 3 erstrecke Nutwindung der Kühlnut 11 mit einer von innen nach außen erstreckten Wendelnut 12 des Zylinderraums 8 kombiniert, wobei die innere Wendelnut 12 und die äußere Kühlnut 11 einander radial zur Drehachse D geringfügig überlagern. Hierdurch ergibt sich zwischen den Wandungen der Wendelnut 12 und der Kühlnut 11 eine lediglich geringe Wandungsstärke, die einen guten Wärmeübergang zwischen einem in der wenigstens einen Kühlnut 11 fließenden Kühlmedium, insbesondere Wasser oder Öl, und der in dem Zylinderraum und damit auch in der wenigstens einen Wendelnut 12 befindlichen Kunststoffschmelze ermöglicht. Da der Zylinder 2 aufgrund der geringen Wandungsstärke zwischen den einander überlagernden Kühlnuten 11 und Wendelnuten 12 im Bereich der Kühlzone 9 vorzugsweise radial eine geringe Druckfestigkeit aufweist, ist der Zylinder 2 im Bereich seines Außenumfangs im Bereich dieser Kühlzone 9 radial nach innen abgestuft und auf den abgestuften Bereich ist ein ringmanschettenförmiger Kühlmantel 10 aufgebracht.

In Fig. 2 ist angedeutet erkennbar, dass sowohl die wendelförmige Kühlnut 11 als auch die innenliegende Wendelnut 12 jeweils die gleiche Wendelsteigung aufweisen. Eine Tiefe der Kühlnut 11 ist um mehr als die Hälfte größer als eine Tiefe des Konstantbereichs der Wendelnut 12. Zudem sind die Kühlnut 11 und die Wendelnut 12 in radialer Richtung zu gegenüberliegenden Seiten hin offen.

Die als Wellenschnecke gestaltete Förderschnecke 3 weist wenigstens über eine axiale Länge der Kühlzone 9 einen wendelförmig gestalteten Schneckengang 3b auf, der durch einen wendelförmig auf dem Außenumfang des Schneckenkerns verlaufenden Schneckensteg 3a begrenzt ist. Der so gebildete, wellenförmige Schneckengang zwischen den Windungen des Schneckenstegs 3a bildet somit in Schneckengangrichtung und damit entlang einer Wendellinie Wellenberge und Wellentäler, so dass der Schneckengang 3b permanent von einer hohen Gangtiefe in eine niedrige Gangtiefe übergeht. Unter der Gangtiefe ist der Abstand des Außenmantels des Schneckenkerns zur Innenwandung des Zylinderraums 8 zu verstehen. Der Schneckengang 3b verändert sich in seiner Tiefe somit bei jeder Umdrehung der Förderschnecke 3.

## Patentansprüche

1. Einschneckenextruder (1) zur Kunststoffplastifizierung mit einem insbesondere einteiligen Zylinder (2) und mit einer in einem Zylinderraum (8) des Zylinders (2) drehbaren Förderschnecke (3), wobei dem Zylinderraum (8) eine Einzugszone (4), eine in Förderrichtung hinter der Einzugszone (4) positionierte Plastifizierzone und eine der Plastifizierzone nachgelagerte Kühlzone (9) zugeordnet sind, die von einer Kühleinrichtung (10) umgeben ist, **dadurch gekennzeichnet, dass** der Zylinder (2) im Bereich der Kühlzone (9) innenseitig mit wenigstens einer zu der Förderschnecke (3) hin offenen Wendelnut (12) versehen ist, und dass der Zylinder (2) außenseitig im Bereich der Kühlzone (9) mit wenigstens einer Kühlnut (11) versehen ist, die der Wendelnut (12) derart zugeordnet ist, dass sich zwischen der innenseitigen Wendelnut (12) und der außenseitigen Kühlnut (11) eine reduzierte Wandungsstärke des Zylinders (2) ergibt, die kleiner oder gleich einer Breite der Wendelnut (12) oder der Kühlnut (11) ist.

2. Einschneckenextruder (1) nach Anspruch 1, **dadurch gekennzeichnet, dass** dem Zylinderraum (8) in Förderrichtung vor der Kühlzone (9) eine Gasinjektionsstelle (G) zugeordnet ist.

3. Einschneckenextruder (1) nach Anspruch 1 oder 2, **dadurch gekennzeichnet, dass** die wenigstens eine Kühlnut (11) wendelförmig gestaltet ist.

4. Einschneckenextruder (1) nach Anspruch 3, **dadurch gekennzeichnet, dass** die wenigstens eine Wendelnut (12) und die wenigstens eine Kühlnut (11) gleiche Wendelsteigungen aufweisen und auf eine Mittellängsachse des Zylinderraums bezogen axial versetzt alternierend zueinander angeordnet sind.

5. Einschneckenextruder (1) nach Anspruch 4, **dadurch gekennzeichnet, dass** die Wendelnut (12) und die Kühlnut (11) einander radial zu einer Drehachse (D) der Förderschnecke (3) abschnittsweise überlagern.

6. Einschneckenextruder (1) nach einem der vorhergehenden Ansprüche, **dadurch gekennzeichnet, dass** die Kühleinrichtung einen ringmanschettenförmigen Kühlmantel (10) aufweist, der die Kühlzone (9) des Zylinders (2) umlaufend stützend umschließt.

7. Einschneckenextruder (1) nach einem der vorhergehenden Ansprüche, **dadurch gekennzeichnet, dass** die Förderschnecke (3) zumindest abschnittsweise als Wellenschnecke gestaltet ist mit einem wendelförmig gewellten Schneckenkern, von dem wenigstens ein wendelförmiger Schneckensteg (3a) nach außen abragt, der wenigstens einen Schneckengang (3b) definiert, der aufgrund der wendelförmigen Wellung des Schneckenkerns alternierende Gangtiefen aufweist.

8. Einschneckenextruder (1) nach Anspruch 7, **dadurch gekennzeichnet, dass** eine Wendelrichtung des wendelförmigen Schneckenstegs (3a) entgegengerichtet zu einer Wendelrichtung der wenigstens einen Wendelnut (12) des Zylinderraums (8) im Bereich der Kühlzone (9) ausgeführt ist.

9. Einschneckenextruder (1) nach einem der vorhergehenden Ansprüche, **dadurch gekennzeichnet, dass** die wenigstens eine Wendelnut (12) eine Nutsteigung aus einem Bereich von 0,5- bis 50-mal, vorzugsweise 0,5- bis 5-mal, einem Innendurchmesser des Zylinderraums (8) aufweist.

10. Einschneckenextruder (1) nach einem der vorhergehenden Ansprüche, **dadurch gekennzeichnet, dass** eine Nutlänge der Wendelnut (12) wenigstens dem Dreifachen des Innendurchmessers des Zylinderraums (8) und weniger als 25-mal dem Innendurchmesser des Zylinderraums (8) entspricht.

11. Einschneckenextruder (1) nach einem der vorhergehenden Ansprüche, **dadurch gekennzeichnet, dass** die Wendelnut (12) mit einem Einlaufbereich mit sich in Förderrichtung von Null aus vergrößernder Nuttiefe, mit einem Konstantbereich mit konstanter Nuttiefe und mit einem Auslaufbereich mit sich bis auf Null reduzierender Nuttiefe versehen ist.

12. Einschneckenextruder (1) nach Anspruch 11, **dadurch gekennzeichnet, dass** der Einlaufbereich und der Auslaufbereich jeweils eine axiale Länge aus einem Bereich von 0,3- bis 1-mal dem Innendurchmesser des Zylinderraums (8) aufweisen.

13. Einschneckenextruder (1) nach einem der vorhergehenden Ansprüche, **dadurch gekennzeichnet, dass** eine Gangsteigung des wenigstens einen Schneckengangs (3b) zwischen 0,5- und 10-mal dem Innendurchmesser des Zylinderraums (8) entspricht.

14. Einschneckenextruder (1) nach einem der vorhergehenden Ansprüche, **dadurch gekennzeichnet, dass** eine Breite des wenigstens einen Schneckenstegs (3a) 0,1- bis 0,2-mal dem Innendurchmesser des Zylinderraums (8) beträgt.

15. Einschneckenextruder (1) nach Anspruch 7, **dadurch gekennzeichnet, dass** die alternierende Gangtiefe des Schneckengangs (3b) zwischen 0,05 und 40 mm abhängig von einem Durchmesser der Wellenschnecke beträgt.
